# EUROPEAN PATENT SPECIFICATION

(11) **EP 1 501 957 B1**
(45) Date of publication and mention of the grant of the patent: **13.06.2007**
(21) Application number: 03736516.0
(22) Date of filing: 30.04.2003
(51) Int. Cl.: C22C 49/02, C22C 49/10, C22C 32/00

(54) **OXIDATION AND WEAR RESISTANT RHENIUM METAL MATRIX COMPOSITES**
OXIDATIONSBESTÄNDIGE UND VERSCHLEISSFESTE VERBUNDWERKSTOFFE MIT RHENIUMMETALL-MATRIX
COMPOSITES A MATRICE METALLIQUE A BASE DE RHENIUM RESISTANTS A L'OXYDATION ET A L'USURE

(30) Priority: 03.05.2002 US 138090
(43) Date of publication of application: 02.02.2005
(73) Proprietor: Honeywell International Inc., Morristown, New Jersey 07960 (US)
(72) Inventor: ADAMS, Robbie, J., Phoenix, AZ 85048 (US)
(74) Representative: Hucker, Charlotte Jane
(86) International application number: PCT/US2003/013450
(87) International publication number: WO 2003/093523

(56) References cited:
- US-A- 4 117 565
- US-A- 4 180 399
- US-A- 5 897 830

## Description

### BACKGROUND OF THE INVENTION

### Field of the Invention

This invention relates to wear-resistant materials and more particularly to wear-resistant composite materials derived from refractory metals such as rhenium.

### Description of the Related Art

Material sciences seeks to exploit from available resources, namely those elements of the periodic table of elements, different materials having different characteristics that can be used for a variety of purposes and applications. Consequently, there is a great interest in developing conductors, insulators, soft materials, and hard materials from available substances and materials.

With respect to engines and mechanical components, wear resistance is typically a desired characteristic because it allows materials to last a longer time and consequently enjoy a cheaper cost per unit time. Even though a part may cost twice as much, it may last four times as long so is then approximately half as expensive as a cheaper part.

One particularly useful metal is elemental rhenium. Rhenium has atomic number 75 in the periodic table of elements. It is known as a refractory metal which means it has a very high melting point as compared to other materials. Despite the fact that it has a very high melting point, rhenium is not necessarily wear-resistant. Rhenium metal melts at approximately 5756°F (3180°C, 3453°Kelvin). However, rhenium begins to oxidize at a much lower temperature, at approximately 1000°F (538°C, 811°K). Rhenium retains excellent ultrahigh temperature strength of approximately 452-653 kg/cm² (6 - 9 Ksi; kips per square inch, ie.1000 pounds per square inch) at 4000°F (2204°C, 2477°K). Far before it reaches this temperature, the oxidation temperature of rhenium becomes a factor and the oxidation of rhenium produces a volatile oxide that will continually evaporate from the surface of the rhenium part until the part has entirely vaporized.

This can lead to catastrophic failure as can be readily perceived as the evaporation of a part during operation would be much like the boiling away of a part made of dry ice. However, where oxygen is lacking, rhenium has been shown to retain high strength and to resist severe corrosion and wear both in established literature as well as independent tests. Such properties are present at room temperature operation and remain with rhenium even though the temperatures are elevated.

In prior literature, relevant alloying includes development of phase diagrams for several binary alloys of rhenium as well as rhenium-enhanced alloys such as those based on tungsten where rhenium is added to the matrix to enhance resulting properties. In such prior literature, rhenium has been a part of binary alloys such as in tungsten to increase ductility.

Rhenium has also been studied for its effect on chromium-based alloys. For steel, alloys with chromium are known that alloy the creation of "stainless steel." When alloyed with chromium in amounts greater than 11%, steel converts from a highly oxidation prone substance to a more corrosion-resistant alloy with the general elimination of rust. Similar concepts are known for use in "super alloys" and corrosion-resistive alloys.

In order to further enhance the wear resistance of a resulting alloy, a hard second phase can be introduced into the metal matrix of the alloy to produce a metal matrix composite. Such metal matrix composite (MMC) may use ceramic fibers such as those from alumina and/or silicon carbide to reinforce metal alloys based on such metals as aluminum and titanium. The resulting materials are stiffer and lighter than the parent alloys and also have a high resistance to wear. Beyond the provision of a basic alloy, additional wear resistance can be introduced into metals by providing an additional second phase in order to increase the wear resistance.

However, the prior art does not well reflect the establishment of oxidation-resistant rhenium-based alloy. Consequently, as there is always a need for better materials and materials having better wear characteristics, the present invention provides a solution to a need that will always be felt for better materials.

Additionally, the art has not well addressed the wear that concentrates at small asperities which are microscopic metal protrusions that generally cause roughness on a surface such as a cast or focused metal. With respect to rhenium-based alloys, wear could be focused on such asperities and such wear would by friction create significant heat that would cause an alloyed rhenium to oxidize and vaporize. ,

### SUMMARY OF THE INVENTION

In view of the foregoing disadvantages inherent in the known types of alloys, materials, and metal matrix composites (MMCs) now present in the prior art, the present invention provides a family of new wear-resistant rhenium-based MMCs wherein the same can be used in environments where unalloyed or pure rhenium would be subject to oxidation and/or vaporization while providing an increased degree of wear resistance.

The general purpose of the present invention, which will be described subsequently in greater detail, is to provide better materials for use in mechanically or otherwise stressful operating environments in order to provide better wear characteristics and function which are not anticipated, rendered obvious, suggested, or even implied by any of the prior art alloys and MMCs, either alone or in any combination thereof.

According to one aspect of the present invention, an oxidation-resistant and wear-resistant Metal Matrix Composition (MMC) is provided, as defined in claim 1.

The present invention takes a refractory metal, namely rhenium, that is subject to oxidation well below its melting point and well below the temperature at which it loses strength and strengthens the metal by selective combination to achieve an alloy that better resists oxidation and that has better wear characteristics. Rhenium, in an amount of equal to or greater than 50 atomic % is combined with cobalt, an alloying material which has a strong affinity for oxygen. Other such alloying materials may also be incorporated, for instance the metals chromium, nickel, titanium, thorium, aluminum, hafnium, and related elements on the periodic table. These alloying materials are at least somewhat soluble in rhenium, if not completely soluble.

It is believed that such elements protect rhenium by forming an oxide on its surface. Once the oxide has formed on the surface of the alloyed part, further attack by oxygen is prevented by the oxide coating. This is a phenomenon that is well-known with aluminum that oxidizes in oxygen, but once the surface of an aluminum object has oxidized, further oxidation is prevented as oxygen can not get to the unoxidized aluminum below the oxidized surface layer.

Consequently, those metals or other alloying agents that oxidize to form high boiling point oxides may well aid in the protection of the underlying rhenium alloy.

Using powder metallurgy, and possibly using free form fabrication (FFF) or casting, parts and components can be fabricated from rhenium-based alloys having oxygen-attracting qualities. The use of such techniques may render useful alloys with better wear and lower oxidation characteristics.

Additionally, a hard second phase material is included in the MMC in order to enhance the wear resistance of the resulting composite. The second phase may be silicon carbide but tungsten carbide, titanium carbide, boron carbide and the like will also enhance the matrix alloy's wear resistance properties. These second phase materials may be in the form of continuous fibers, short fibers (or whiskers), particulates/particles. Preferably, the second phase in the form of granular particles as it is believed that this form of the second phase better enhances the wear resistance properties of the resulting composite and makes formation easier. Other features and advantages of the present invention will become apparent from the following description of the preferred embodiments which illustrate by way of example the principles of the invention.

### DESCRIPTION OF THE PREFERRED EMBODIMENT(S)

The detailed description set forth below is intended as a description of presently-preferred embodiments of the invention and is not intended to represent the only forms in which the present invention may be constructed and/or utilized. The description sets forth the functions and the sequence of steps for constructing and operating the invention in connection with the preferred embodiments. However, it is to be understood that the same or equivalent functions and sequences may be accomplished by different embodiments that are also intended to be encompassed within the invention.

The present invention is achieved by, preferably, initially obtaining some amount of pure rhenium in order to provide a better and unadulterated alloy. Rhenium is a refractory metal and the process described herein may apply to other refractory metals that require protection from oxidation in order to obtain better wear-resistant characteristics or otherwise.

The alloys set forth herein may be fabricated by powder metallurgy at relatively low pressures and temperatures for refractory metals, on the order of 20.7-27.6 MPa (3,000-4,000 psi; pounds per square inch) at approximately 1800°F (982°C, 1255.15°K) for rhenium. Alternatively, free form fabrication (FFF) or casting may also provide good results. This last option of casting is generally difficult and costly due to the very high melting temperature of rhenium. Additionally, due to the oxidation characteristics of rhenium, the ambient environment in which rhenium alloy is formed (as by powder metallurgy, free-form fabrication, and/or casting) may need to be neutral, reducing, and/or under vacuum in order to avoid oxidation. Practically, powder metallurgy and free form fabrication techniques are believed to be the most effective.

In terms of atomic percent, a preferred alloy composed of 60% rhenium, 20% cobalt, 15% chromium, and 5% magnesium has shown to lower the oxidation rate of pure rhenium by a factor of 10. Additional alloys using various percentages of cobalt, chromium, manganese, nickel, vanadium, silicon, aluminum, yttrium, titanium, thorium, hafnium, or other elements may also be used either alone or in combination with each other. Other elements or substances with affinity for oxygen that produce oxidation-protective coating for the underlying rhenium or rhenium alloy are appropriate for use in order to achieve the present invention. Additional, such alloying substances are believed to be more effective if they are at least, if not completely, soluble in rhenium.

A minimum of 50% rhenium atomic percent is combined with cobalt in order to produce an alloy with desired characteristics. The atomic percent of cobalt preferably ranges from approximately 0% to 50%. Additionally, chromium may be added in an amount ranging from approximately 10-15% by atomic percent.

In one embodiment, known in the trade as Honeywell Alloy HRA33, the atomic percentages are as follows: rhenium approximately 55%, cobalt approximately 20%, chromium approximately 10%, nickel approximately 10% and manganese approximately 5%.

The alloys created herein cannot only be used as material by which components or parts may be formed, but also as a coating under which rhenium or other core components could be protected from oxidation and/or to increase wear resistance in elevated temperature environments such as those arising in operating jet engines. Under such circumstances, matching of coefficients of thermal expansion may prove useful and further research may be performed in this area. It is believed that those of ordinary skill in the art would not have to perform undue experimentation in order to achieve the alloys set forth herein in order to obtain the desired characteristics. Similarly, the same is also believed to be true for the use of the alloy of the present invention for coating underlying materials.

Once the alloy has been prepared or, in order to avoid high casting temperatures, prior to the alloying process, one or more hard second phase elements are added to the alloy or pre-alloy in order to ultimately produce a metal matrix composite (MMC) that has additional wear resistance capacity as well as enjoying the oxidation resistance of the resulting alloy.

Continuous fibers, whiskers (short fibers), or granular particulate can be added to the precast melt or pre-alloy mixture in order to achieve the MMC with the enhanced characteristics. Materials for use as the second phase include silicon carbide as a presently preferred embodiment of the second phase. However, other carbides (such as those of tungsten, titanium, boron, etc.) can also be used to good effect. The second phase material(s) may be embedded in the rhenium-based alloy within the resulting MMC.

If prepared in powdered form, the resulting combination of pre-alloy and second phase constituents can be combined in a powder for use in free-form fabrication techniques including laser sintering systems. Such techniques generally cause the edges of powder particles melt upon absorbing sufficient energy and then fuse in order to create the resulting solid. Such free-form fabrication techniques can result in net-shape or near-net-shape components that enjoy resistance to oxidation and wear while additionally requiring less post-manufacture machining in order to meet the tolerances necessary for the resulting part or device.

The inclusion of second phase particles enable them to bear all or part of the wear load instead of the alloy surface. For second phase materials such as silicon carbide, high thermal wear properties of the second phase aid in the reduction of surface temperature during the application and wear stress. The use of an intrinsically wear-resistant matrix such as the rhenium alloys described herein make the resulting metal matrix composite significantly more wear-resistant as the alloy provides support in its own right.

While casting, powder metallurgy, and free form fabrication (FFF) may be effectively used to achieve the metal matrix composites of the present invention, powder metallurgy techniques are currently seen as being the most effective at present. One embodiment of a metal matrix composite in accordance with the invention herein may have a nominal composition of 20% cobalt, 15% chromium, 5% manganese, and 60% rhenium (HRA30). Unless otherwise specified, all percentages set forth herein are atomic percentages. A second alloy known as Honeywell rhenium alloy (HRA33) includes 20% cobalt, 10% nickel, 10% chromium, 5% manganese, and 55% rhenium. This embodiment, HRA33, produces an alloy with an oxidation resistance approaching that of 304 stainless steel up to temperatures of 1200°F (649°C, 922°K).

Silicon carbide as a second phase component can be added to either of these alloys in order to create a metal matrix composite with enhanced wear characteristics. The resulting composite (where 20% silicon carbide is added to HRA33 above) has been designated HRA35. HRA35 may also be achieved by combining 15% silicon carbide with 10% nickel, 10% cobalt, 10% chromium, 5% manganese with 50% rhenium.

Tests conducted on these alloys have shown wear resistance in excess of a pressure-velocity (PV) of 16970 MPa-metre/min (750,000 psi-ft/min; pounds square inch-feet/minute).

Additional alloying elements, including vanadium and thorium may add additional wear and/or oxidation-resistance to the rhenium-based alloy. Aluminum oxide, yttrium oxide, and titanium carbide may also provide excellent candidates for second phase materials.

The resulting MMC alloys may be used either as a coating or as the constituent material for the manufactured component. Currently, rhenium is expensive and it may be cost effective to coat less expensive substrates in order to provide wear resistant parts. Such coating processes may be successfully applied to face seals for rotors and the like as well as to gears, shafts, and other moving contact parts. Additionally, the rhenium-based metal matrix composite described herein may lend itself to use as a high temperature structural material in an oxidating elevated temperature environment such as that found in a jet engine. For applications of the instant MMC alloys as coatings, intermediate coatings may be used to enhance adhesion or otherwise between the outer MMC alloy coating and the underlying substrate.

The present invention provides a material alloy by which robust and durable parts may be achieved for use in hostile operating conditions such as those in jet engines or the like.

## Claims

1. An oxidation-resistant and wear-resistant metal matrix composite (MMC), comprising:
a rhenium-based oxidation-resistant alloy, consisting of:
rhenium in an amount equal to or greater than 50 atomic %, and cobalt in an amount of up to 50 atomic % which is at least partially dissolved in the rhenium,
chromium in a range from 0 to 50 atomic %,
manganese in a range from 0 to 10 atomic %, and
nickel in a range of from 0 to 15 atomic %,
wherein the alloy optionally further comprises one or more elements selected from the group consisting of vanadium, silicon, aluminium, yttrium and thorium, and
a hard second phase material for use in the formation of a rhenium-based metal matrix composite (MMC), whereby an enhanced wear-resistant metal matrix composite is produced by the presence of the hard phase material embedded in the rhenium based oxidation-resistant alloy.

2. An oxidation-resistant and wear-resistant metal matrix composite (MMC) as claimed in claim 1, wherein chromium is in a range of 10-15 atomic %.

3. An oxidation-resistant and wear-resistant metal matrix composite (MMC) as claimed in claim 1, the alloy consisting of 60 atomic % rhenium, 20 atomic % cobalt, 15 atomic % chromium and 5 atomic % manganese.

4. An oxidation-resistant and wear-resistant metal matrix composite (MMC) as claimed in claim 1, the alloy consisting of approximately 55 atomic % rhenium, approximately 20 atomic % cobalt, approximately 10 atomic % chromium, approximately 10 atomic % nickel, and approximately 5 atomic % manganese.

5. An oxidation-resistant and wear-resistant metal matrix composite (MMC) as claimed in any one of claims 1, 3 or 4, wherein the hard second phase material is ceramic.

6. An oxidation-resistant and wear-resistant metal matrix composite (MMC) as claimed in any one of claims 1, 3 or 4, wherein the hard second phase material is carbide.

7. An oxidation-resistant and wear-resistant metal matrix composite (MMC) as claimed in claim 5, wherein the hard second phase material further comprises materials selected from the group consisting of silicon carbide, tungsten carbide, titanium carbide and boron carbide.

## Patentansprüche

1. Oxidationsbeständiger und verschleißfester Metallmatrixverbundstoff (MMV) umfassend:
eine oxidationsbeständige Legierung auf Rheniumbasis bestehend aus:
Rhenium in einer Menge von 50 Atom-% oder mehr und Kobalt in einer Menge von bis zu 50 Atom-%, das mindestens teilweise in dem Rhenium gelöst ist,
Chrom in einem Bereich von 0 bis 50 Atom-%,
Mangan in einem Bereich von 0 bis 10 Atom-% und
Nickel in einem Bereich von 0 bis 15 Atom-%,
wobei die Legierung wahlweise des Weiteren ein oder mehrere Elemente umfasst ausgewählt aus der Gruppe bestehend aus Vanadium, Silicium, Aluminium, Yttrium und Thorium und
einem harten zweiten Phasenmaterial zur Verwendung bei der Bildung eines Metallmatrixverbundstoffs (MMV) auf Rheniumbasis, wobei ein verbesserter verschleißfester Metallmatrixverbundstoff durch die Gegenwart des Hartphasenmaterials, das in der oxidationsfesten Legierung auf Rheniumbasis eingebettet ist, hergestellt wird.

2. Oxidationsbeständiger und verschleißfester Metallmatrixverbundstoff (MMV) nach Anspruch 1, wobei das Chrom in einem Bereich von 10-15 Atom-% liegt.

3. Oxidationsbeständiger und verschleißfester Metallmatrixverbundstoff (MMV) nach Anspruch 1, wobei die Legierung aus 60 Atom-% Rhenium, 20 Atom-% Kobalt, 15 Atomprozent Chrom und 5 Atom-% Mangan besteht.

4. Oxidationsbeständiger und verschleißfester Metallmatrixverbundstoff (MMV) nach Anspruch 1, wobei die Legierung aus etwa 55 Atom-% Rhenium, etwa 20 Atom-% Kobalt, etwa 10 Atom-% Chrom, etwa 10 Atom-% Nickel und etwa 5 Atom-% Mangan besteht.

5. Oxidationsbeständiger und verschleißfester Metallmatrixverbundstoff (MMV) nach einem der Ansprüche 1, 3 oder 4, wobei das harte zweite Phasenmaterial ein Keramikmaterial ist.

6. Oxidationsbeständiger und verschleißfester Metallmatrixverbundstoff (MMV) nach einem der Ansprüche 1, 3 oder 4, wobei das harte zweite Phasenmaterial Carbid ist.

7. Oxidationsbeständiger und verschleißfester Metallmatrixverbundstoff (MMV) nach Anspruch 5, wobei das harte zweite Phasenmaterial des Weiteren Materialien umfasst ausgewählt aus der Gruppe bestehend aus Siliciumcarbid, Wolframcarbid, Titancarbid und Borcarbid.

## Revendications

1. Composite à matrice métallique résistant à l'oxydation et à l'usure (MMC), comprenant:
un alliage à base de rhénium résistant à l'oxydation, composé de:
rhénium en une quantité égale ou supérieure à 50 pour cent atomiques; et
cobalt en une quantité allant jusqu'à 50 pour cent atomiques et qui est au moins partiellement dissous dans le rhénium,
du chrome en une quantité comprise dans une plage de 0 à 50 pour cent atomiques,
du manganèse en une quantité comprise dans une plage de 0 à 10 pour cent atomiques,
du nickel en une quantité comprise dans une plage de 0 à 15 pour cent atomiques,
dans lequel l'alliage comprend en outre optionnellement un ou plusieurs élément(s) sélectionné(s) dans le groupe comprenant le vanadium, le silicium, l'aluminium, l'yttrium et le thorium; et
une matière dure de deuxième phase à utiliser pour la formation d'un composite à matrice métallique à base de rhénium (MMC), où un composite à matrice métallique résistant à l'usure amélioré est produit par la présence de la matière de phase dure incorporée dans l'alliage à base de rhénium résistant à l'oxydation.

2. Composite à matrice métallique résistant à l'oxydation et à l'usure (MMC) selon la revendication 1, dans lequel le chrome est présent dans une plage de 10 à 15 pour cent atomiques.

3. Composite à matrice métallique résistant à l'oxydation et à l'usure (MMC) selon la revendication 1, dans lequel l'alliage est composé de 60 pour cent atomiques de rhénium, 20 pour cent atomiques de cobalt, 15 pour cent atomiques de chrome et 5 pour cent atomiques de manganèse.

4. Composite à matrice métallique résistant à l'oxydation et à l'usure (MMC) selon la revendication 1, dans lequel l'alliage est composé d'approximativement 55 pour cent atomiques de rhénium, d'approximativement 20 pour cent atomiques de cobalt, d'approximativement 10 pour cent atomiques de chrome, d'approximativement 10 pour cent atomiques de nickel et d'approximativement 5 pour cent atomiques de manganèse.

5. Composite à matrice métallique résistant à l'oxydation et à l'usure (MMC) selon l'une quelconque des revendications 1, 3 ou 4, dans lequel la matière dure de deuxième phase est la céramique.

6. Composite à matrice métallique résistant à l'oxydation et à l'usure (MMC) selon l'une quelconque des revendications 1, 3 ou 4, dans lequel la matière dure de deuxième phase est un carbure.

7. Composite à matrice métallique résistant à l'oxydation et à l'usure (MMC) selon la revendication 5, dans lequel la matière dure de deuxième phase comprend en outre des matières sélectionnées dans le groupe comprenant le carbure de silicium, le carbure de tungstène, le carbure de titane et le carbure de bore.
